Europäisches Patentamt

European Patent Office

Office européen des brevets

(11) Veröffentlichungsnummer: **0 189 783 B1**

# EUROPÄISCHE PATENTSCHRIFT

(45) Veröffentlichungstag der Patentschrift: **21.08.91**

(51) Int. Cl.⁵: **A01D 57/30**

(21) Anmeldenummer: **86100445.5**

(22) Anmeldetag: **15.01.86**

(54) Anbaugerät für Schwadmaschinen.

(30) Priorität: **16.01.85 DE 3501219**

(43) Veröffentlichungstag der Anmeldung:
**06.08.86 Patentblatt 86/32**

(45) Bekanntmachung des Hinweises auf die
Patenterteilung:
**21.08.91 Patentblatt 91/34**

(84) Benannte Vertragsstaaten:
**AT BE CH FR GB IT LI NL**

(56) Entgegenhaltungen:
DE-A- 1 407 746          DE-A- 1 482 207
DE-A- 1 782 793          DE-A- 2 220 114
DE-A- 3 423 410          FR-A- 1 559 819
FR-A- 1 599 812          FR-A- 2 097 023
GB-A- 1 601 738          NL-A- 7 809 024
NL-A- 8 301 411          NL-C- 113 955
US-A- 3 690 055

(73) Patentinhaber: **Einsiedler, Wendelin,
Dipl.-Agr.-Ing. FH
Eufnach 86
W-8961 Wildpoldsried(DE)**

(72) Erfinder: **Einsiedler, Wendelin, Dipl.-Agr.-Ing.
FH
Eufnach 86
W-8961 Wildpoldsried(DE)**

## Beschreibung

Die Erfindung betrifft ein Anbaugerät für Schwadmaschinen gemäß dem Ober begriff des Anspruchs 1.

Eine ähnliche Anlenkung von Heuwerbemaschinen ist bekannt (DE-A 2220114). Die Bodenanpassung dieser Maschine erfolgt über eine einstellbare, horizontale, quer zur Fahrtrichtung liegende, sowie über eine begrenzt frei schwenkbare, horizontale, in Fahrtrichtung liegende Achse. Das Schlepperrad paßt zusammen mit der Abstützung der Heuwerbemaschine das Arbeitsgerät den Bodenunebenheiten an. Durch den relativ weiten Abstand von Schlenperrad und Heuwerbemaschine erfolgt in welligem Gelände die Bodenanpassung ungenau. Außerdem ist bei der Anpassung über das horizontale, in Fahrtrichtung liegende Gelenk die Bodenparallelität der Arbeitsgeräte nicht gegeben. Die Folgen sind Grasnarbenverletzungen, liegengebliebenes und verschmutztes Futter.

Auch ist eine kompakte Transportstellung nicht gegeben.

Demgegenüber liegt der Erfindung die Aufgabe zugrunde, besonders auf welligem Gelände die Ansprechwelle für die Bodenanpassung herabzusetzen und die Bodenparallelität der Maschine weitgehend zu gewährleisten. In Transportstellung soll gerade im Frontanbau die Frontausladung und Frontlastigkeit verringert werden.

Diese Aufgabe wird gemäß der Erfindung nach den kennzeichnenden Merkmalen des Patentanspruches 1 gelöst.

Bei der erfindungsgemäßen Anlenkung der Heuwerbemaschine wird durch die begrenzt frei schwenkbare, horizontale, quer zur Fahrtrichtung liegende Achse und durch die zweite, begrenzt schwenkbare, in Fahrtrichtung liegende, horizontale Achse die Bodenparallelität des Gerätes auf unebenem Gelände deutlich verbessert und durch das vorauslaufende Tastrad die Maschine rechtzeitig den Bodenwellen angepaßt. In Transportstellung wird durch Zurückklappen auf der begrenzt frei schwenkbaren, horizontalen, quer zur Fahrtrichtung liegenden Achse die Frontlastigkeit und Frontausladung stark reduziert.

Das Anbaugerät ist mit einem üblichen Anbaubock oder mit Schnellkupplern 1 an der Dreipunktheck- oder Dreipunktfronthydraulik eines Schleppers verbunden. Dieser Schlepper-Verbindung ist eine quer zur Fahrtrichtung, waagrecht liegende Achse 2 in einem von der Schwadeinheit bestimmten Abstand vorgelagert. Auf dieser Achse 2 setzen zwei voneinander getrennte Gelenke 3, 3' an. Die Gelenke 3, 3' auf der Querachse 2 sorgen für eine Bodenanpassung der breiten Schwadeinheiten in Fahrtrichtung FR,. In Transportstellung sind die Schwadeinheiten um diese Achse zurückgeklappt. An den Gelenken 3, 3' setzen etwas nach oben versetzte Gelenkachsen 4, 4' diesmal in Fahrtrichtung, also zum ersten Gelenk, um 90° versetzt, liegend an. Ein daran angelenkter, seitlicher Verbindungsarm 5, 5' ist an jedem Ende höhenbeweglich. Dadurch wird die Bodenanpassung in Richtung quer zur Fahrtrichtung und der zur Anpassung notwendige Höhenausgleich zwischen Schwadeinheit und Schleppervorder- bzw. Schlepperhinterachse ermöglicht. An der äusseren Gelenkachse 6, 6' eines jeden Verbindungsarmes 5, 5' setzt höhenbeweglich eine Geräteverbindung 7, 7' zur Schwadeinheit an. Diese Geräteverbindung 7, 7' greift mit einem schnell lösbaren Verschluß oder einer Verschraubung etwa in der Mitte an der Schwadeinheit an. Die Schwadeinheiten sind symetrisch zur Schlepperlängs-Achse angelegt. Sie können auch so angeordnet werden, daß im Heckanbau in Rückwärtsfahrt geschwadet werden kann und somit das Futter auch im Heckanbau nicht überfahren wird. Zu der Geräteverbindung 7, 7' gehört zum Verbindunsarm 5, 5' hin ein Anschlag, welcher dem Schwadgerät einen bestimmten Bewegungsraum läßt und beim Hochheben die Schwadeinheit feststellt. Außerdem ist an dieser Geräteverbindung 7, 7' ein der Schwadeinheit vorauslaufendes, schwenkbares und höhenverstellbares Tastrad angeordnet. Das Schwadgerät paßt sich also selbst frei dem Boden an. Wenn die Schwadmaschine Führungsräder benötigt, müssen auch diese schwenkbar sein, um Richtungskorrekturen oder Kurvenfahrten zu ermöglichen.

Zum Heben und Senken und zum Hochklappen um die Achse 2 in Transportstellung befindet sich ein Hydraulik-Zylinder 8, 8' am Schwadgerät vor der quer zur Fahrtrichtung liegenden Achse 2 und oberhalb des inneren Gelenkes 4, 4' des seitlichen Verbindungsarmes 5, 5'. Der Hydraulikzylinder 8, 8' wird durch einen oberhalb der inneren Verbindungsarm-Achse 4, 4' stehenden Bügel £9, 9' gehalten und setzt über einen Hebel 10, 10' am seitlichen Verbindungsarm 5, 5' an.Beim Ausheben bildet eine Kette oder ein Seil 11, 11' den Anschlag für die Gelenke 3, 3' mit der quer zur Fahrtrichtung liegenden Achse 2. Die Kette 11, 11' wird mit Rollen 12, 12' über den Anbaubock 1 oder den Oberlenker gelenkt und am Schlepper und am Haltebügel 9, 9' des Hydraulikzylinders 8, 8' befestigt. So angelegt ziehen die Anschlagsketten oder -seile 11, 11' die zwei Schwadgeräte beim Hochheben durch die Dreipunkthebe-Einrichtung zurück. Stoßdämpfer zwischen Anbaubock 1 bzw. Oberlenker und Haltebügel 9, 9' sorgen für ein ruhiges Klappen und ein Anschlagpaar 13, 13', angelegt an Anbaubock 1 und Haltebügel 9, 9' hält die Schwadeinheit in hochgeklappter Stellung.

Der Zapfwellenstummel ist auf eine Doppelriemenscheibe 14 aufgeflanscht. Diese Doppelriemenscheibe 14 ist genau oberhalb der quer zur Fahrtrichtung liegenden Achse 2 gelagert und die Achse der Riemenscheibe 14 fluchtet mit der Achse des innenliegenden Gelenkes 4, 4 des Verbindungsarmes 5, 5'. Eine zweite Doppelriemenscheibe 14' ist symetrisch zur Schlepperlängsachse ebenso gelagert. Eine Spannrolle zwischen den Doppelriemenscheiben 14, 14' gleicht Spannungsänderungen des Riemens zwischen den getrennt beweglichen Doppelriemenscheiben 14, 14' aus. Von beiden Doppelriemenscheiben 14, 14' geht je ein Riemen zur Schwadeinheit. Die Achse der Riemenscheibe der Schwadeinheit fluchtet mit der Achse des aussenliegenden Gelenkes 6, 6' des seitlichen Verbindungsarmes 5, 5'. Der Antriebriemen zur Schwadeinheit läuft somit immer parallel zum seitlichen Verbindungsarm 5,5', ohne daß sich der Weg zwischen den Riemenscheiben ändert. Der Riemen zwischen den beiden Doppelriemenscheiben 14, 14' kann geschränkt und somit die Drehrichtung einer Schwadeinheit, z.B. für die Bildung von Nachtschwaden, geändert werden. Die Antriebsverbindung von der Doppelriemenscheibe 14, 14' zur Schwadeinheit kann auch mit Antriebsketten erfolgen. Die drehrichtungsänderbare Schwadeinheit ist dann an der Geräteverbindung 7, 7' um eine etwa vertikale Achse schwenkbar, so daß die zwei Schwadeinheiten von der zueinander v-förmigen Stellung in eine Parallel-Stellung gebracht werden können. An dieser Schwadeinheit ist dann jeweils eine zweite Riemenscheibe notwendig, und die Zinkenanordnung oder der Kreisel muß für zwei Drehrichtungen geeignet sein oder der Zinkenkreisel muß auswechselbar konstruiert sein. So können in einem Arbeitsgang zwei Nachtschwaden, oder bei massigem Schwadgut, zwei Ladeschwaden gebildet werden. Dazu könnte man eine Kreizelschwadmaschine so gestalten, daß man die Kreisel auseinanderziehen und somit ihren Abstand voneinander vergrößern kann und so in einem Arbeitsgang mehrere kleine Nachtschwaden bei größerer Arbeitsbreite bilden kann.

Zwischen den zwei Schwadeinheiten ist in der Mitte ein beschwerter Schurz von Anbaugerät zum Boden eingehängt, um bei schleuderfähigem Futter und einseitigem Futteranfall einen sauberen Schwad zu formen. Wenn notwendig, können auch an den Unterlenkern der Dreipunkt-Hebeneinrichtung Schurze angelegt werden, welche den Schwad trichterförmig ummanteln.

Die zwei Schwadeinheiten werden unabhängig voneinander und ohne vom Schlepperrad beeinflußt zu werden, mit den waagrecht liegenden, gegeneinander um 90° versetzten Achsen 2, 4, 4' seitlich und nach vorne in Fahrtrichtung dem Boden angepaßt. Die seitliche Bodenanpassung der Schwadeinheit und der Höhenausgleich zwischen Anbaugerät und Schwadelement erfolgt durch zwei Gelenke 4, 4', 6, 6', deren Achsen mit den Achsen der Riemenscheiben fluchten. Diese Konstellation ermöglicht den mechanischen Antrieb in bodenanpassender Arbeitsstellung, während des Absetzens und Aushebens der Geräte, und erlaubt ein Auslaufen der Schwadeinheiten in hoch- und zurückgeklappter Transportstellung. In Arbeitsstellung wird die Bodenanpassung durch den mechanischen Antrieb nicht gestört oder beeinflußt. Der mechanische Antrieb ist relativ einfach und kostengünstig gestaltet und es kann auf einfache Weise die Drehrichtung eines Schwadgerätes geändert werden.

Das bisherige, oftmalige Transportproblem ist bei diesem Anbaugerät gut gelöst. Die Schwadelemente sind etwa in ihrer Mitte an der Geräteverbindung 7, 7' angelegt. Das um 90 ° versetzte Doppelgelerk 2, 4, 4' ermöglicht das seitliche Hochklappen und gleichzeitig das automatische Rückklappen der Schwadeinheiten durch Hochheben mittels der Dreipunkthebeeinrichtung. Dadurch wird besonders im Frontanbau die Ausladung größerer Arbeitsgeräte nach vorne stark reduziert und somit dem Trägerfahrzeug eine bestmögliche Wendigkeit gegeben. Zudem wurde das Problem der Frontlastigkeit durch Verlagern des Schwerpunkts in Nähe der Schlepperradachse gelöst.

Die Möglichkeit des schnellen An- bzw. Umbaues bereits vorhandener Schwadmaschinen ist gegeben, dadurch verringert sich der Kapitaleinsatz. Der Einsatz der Schwadmaschinen im v Förmigen Front- bzw. Heckanbau und die Rückmontierung in den einfachen, herkömmlichen Heckanbau erhöht die Einsatzmöglichkeiten und Wirtschaftlichkeit der Maschinen.

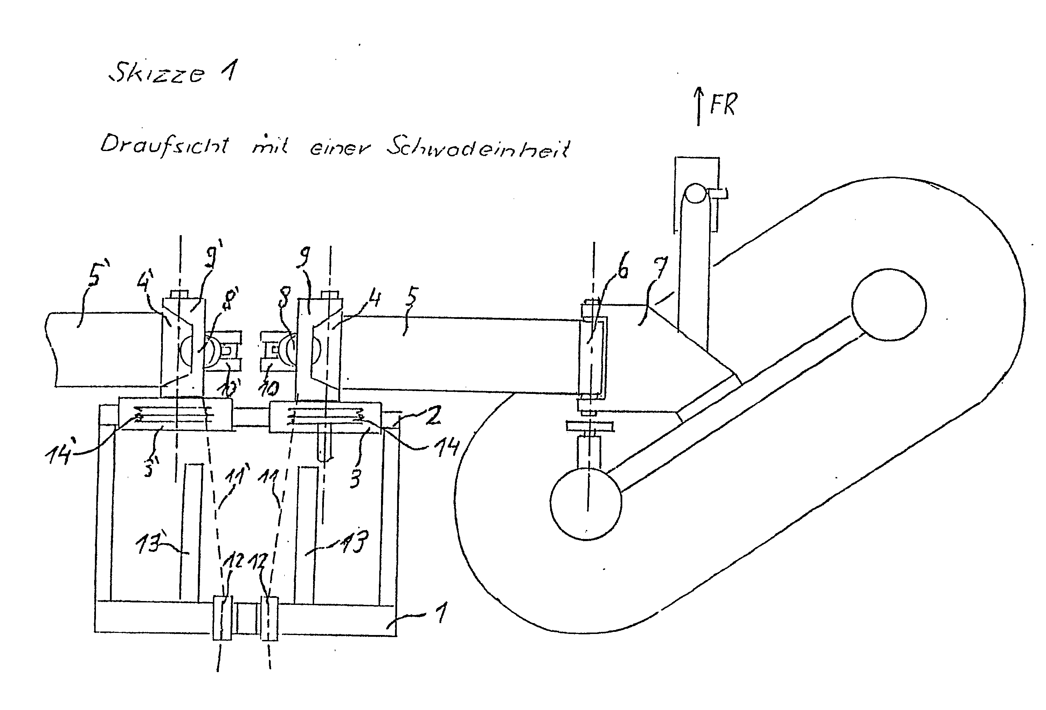

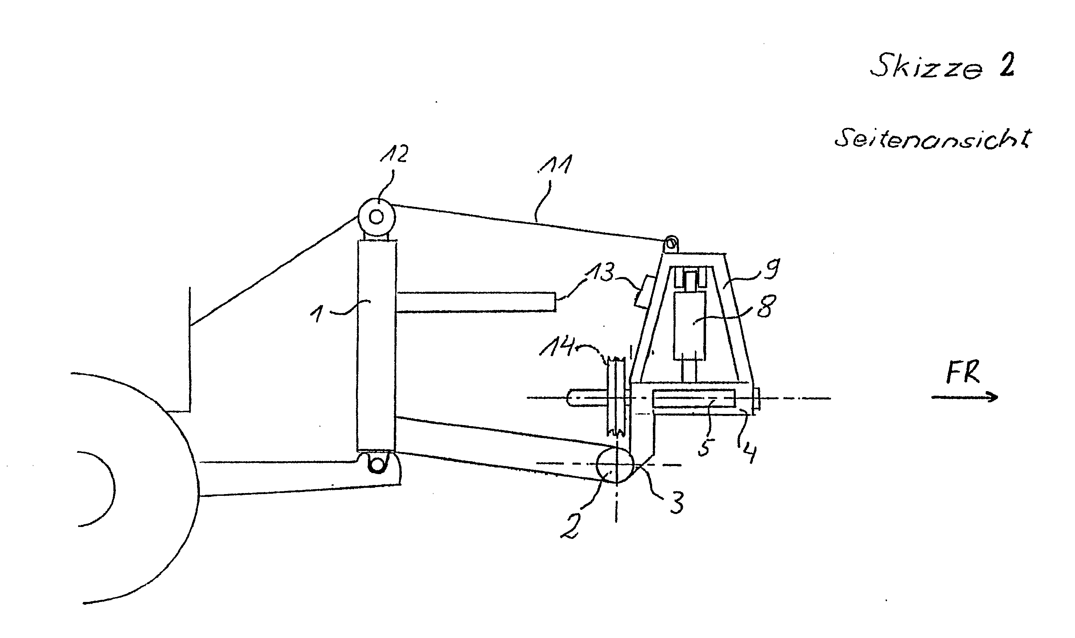

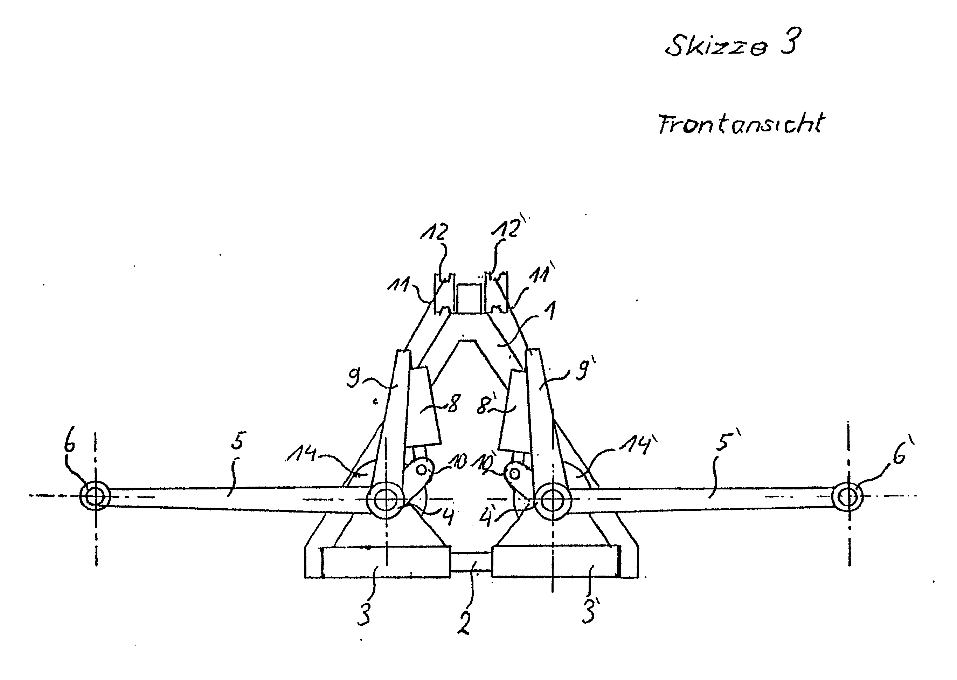

**Patentansprüche**

1. Anbaugerät für eine Schwadmaschine, das an einem Anbaubock (1) der Dreipunkt-Hebeeinrichtung eines Schleppers anbaubar und symmetrisch zur Schlepper-Längsachse mit zwei Schwadeinheiten verbindbar ist, die im Betrieb auf dem Boden mittels Führungsrädern abgestützt und um eine horizontale, in Fahrtrichtung liegende Achse (4, 4') begrenzt schwenkbar, sowie um eine horizontale, quer zur Fahrtrichtung liegende Achse (2) in der Neigung einstellbar sind,

**dadurch gekennzeichnet**

daß jede Schwadeinheit nicht nur um die horizontale, in Fahrtrichtung liegende Achse, (4, 4') sondern auch um die quer zur Fahrtrichtung liegende Achse (2) begrenzt frei schwenkbar und um eine weitere, in Fahrtrichtung verlaufende, Achse (6, 6') begrenzt frei schwenkbar an einem Verbindungsarm (5, 5') angelenkt und jeder Schwadeinheit ein Tastrad vorlaufend zugeordnet ist.

2. Anbaugerät nach Anspruch 1), dadurch gekennzeichnet, daß die in der Fahrtrichtung liegenden Achsen (4, 4, 5, 6) mit den Achsen der Riemenscheiben (z.B. 14, 14') für den Antrieb der Schwadeinheiten fluchten.

3. Anbaugerät nach Anspruch 1), dadurch gekennzeichnet, daß die Schwadeinheit fest mit einer Geräteverbindung (7, 7') und diese gelenkig (Achse 6, 6') mit dem Verbindungsarm (5, 5') verbunden ist.

4. Anbaugerät nach Anspruch 1), dadurch gekennzeichnet, daß eine Geräteverbindung (7, 7') über einen Schnellverschluß etwa mittig an der Schwadeinheit angelenkt ist.

5. Anbaugerät, nach Anspruch 1), dadurch gekennzeichnet, daß die drehrichtungsänderbare Schwadeinheit an der Geräteverbindung (7, 7') um eine vertikale Achse schwenkbar angelenkt ist.

6. Anbaugerät nach einem der Ansprüche 3) oder 4), dadurch gekennzeichnet, daß zwischen der Geräteverbindung (7, 7') und dem Verbindungsarm (5, 5') ein Anschlag vorgesehen ist.

7. Anbaugerät nach Anspruch 1), dadurch gekennzeichnet, daß das Tastrad schwenkbar und zwecks Einstellung des Neigungswinkels der Schwadeinheit in der Höhe einstellbar ist.

8. Anbaugerät nach Anspruch 1), dadurch gekennzeichnet, daß oberhalb der in der Fahrtrichtung liegenden Achse (4, 4') ein Hydraulikzylinder (8, 8') über einen Hebel (10, 10') am Verbindungsarm (5, 5') angreift.

9. Anbaugerät nach Anspruch 7), dadurch gekennzeichnet, daß ein Anschlag (13) für die Verschwenkung um die quer zur Fahrtrichtung liegenden Achse (2) und je eine Kette oder ein Seil (11, 11') vorgesehen ist, das über eine Rolle (12, 12') über den Anbaubock (1) geführt und am Schlepper sowie an einem Haltebügel (9, 9') des Hydraulikzylinders (8, 8') befestigt ist.

10. Anbaugerät nach Anspruch 9), dadurch gekennzeichnet, daß als Anschlag für die Verschwenkung um die quer zur Fahrtrichtung liegenden Achse (2) ein Anschlagpaar (13, 13') zwischen Anbaubock (1) und Haltebügel (9, 9') vorgesehen ist.

11. Anbaugerät nach Anspruch 2), dadurch gekennzeichnet, daß die Zapfwellenseitige Riemenscheibe (14, 14') je Schwadeinheit als Doppelriemenscheibe (14, 14') ausgebildet ist.

12. Anbaugerät nach Anspruch 11), dadurch gekennzeichnet, daß die Doppelriemenscheibe (14, 14') oberhalb der quer zur Fahrtrichtung liegenden Achse (2) angeordnet ist und ihre Achse mit der in der Fahrtrichtung liegenden Achse (4, 4') fluchtet.

13. Anbaugerät nach Anspruch 12), dadurch gekennzeichnet, daß zwischen den beiden Doppelriemenscheiben (14, 14') ein schränkbarer Keilriemen mit Spannrolle vorgesehen ist.

14. Anbaugerät nach Anspruch 1), dadurch gekennzeichnet, daß zwischen den in der Fahrtrichtung liegenden Achsen (4, 4', 6, 6') ein Kettentrieb vorgesehen ist.

15. Anbaugerät nach Anspruch 1), dadurch gekennzeichnet, daß der Antrieb einer Schwadeinheit auch bei Transportstellung der anderen Schwadeinheit gewährleistet ist.

16. Anbaugerät nach Anspruch 1), dadurch gekennzeichnet, daß zwischen den Schwadeinheiten ein beschwerter Schurz vorgesehen ist.

17. Anbaugerät nach Anspruch 16), dadurch gekennzeichnet, daß zwei Schurze trichterförmig an den Unterlenkern angeordnet sind.

## Claims

1. Mounting device for a swather, which can be fastened to a coupling jack (1) of the three-point lifting mechanism of a tractor vehicle and linked symetrically, in regard to the longitudinal axis of the tractor vehicle, to two swathing units which lean on the soil during work by means of guiding wheels, which can pivot within certain limits around an horizontal axis (4, 4') directed towards the direction of advance and the inclination of which can be adjusted around an axis (2) directed transversely to the direction of advance, characterized in that each swathing unit can freely pivot, within certain limits, not only around the horizontal axis (4, 4') directed towards the direction of advance, but also around the axis (2) directed transversely to the direction of advance and around an additional axis (6, 6') directed towards the direction of advance, through which it is articulated on a connecting arm (5, 5') and in that to each swathing unit is attached a feeler wheel located in front of it.

2. Mounting device according to Claim 1, characterized in that the axes (4, 4', 6, 6') directed towards the direction of advance are aligned with the pulleys (for example 14, 14') driving the swathing units.

3. Mounting device according to Claim 1, characterized in that the swathing unit is rigidly connected to a connecting device (7, 7') itself articulated (axis 6, 6') on the connecting arm (5, 5').

4. Mounting device according to Claim 1, characterized in that a connecting device (7, 7') is articulated about on the middle of the swathing unit by fast-fixing means.

5. Mounting device according to Claim 1, characterized in that the swathing unit, the direction of rotation of which is modifiable, is articulated on the connecting device (7, 7') in such a way that it can pivot around a vertical axis.

6. Mounting device according to Claim 3 or 4, characterized in that an abutment is foreseen between the connecting device (7, 7') and the connecting arm (5, 5').

7. Mounting device according to Claim 1, characterized in that the feeler wheel can pivot and is adjustable in height in order to adjust the angle of inclination of the swathing unit.

8. Mounting device according to Claim 1, characterized in that above the axis (4, 4') directed towards the direction of advance an hydraulic jack (8, 8') is linked to the connecting arm (5, 5') by means of a lever (10, 10').

9. Mounting device according to Claim 7, characterized in that an abutment (13) for the rotation around the axis (2) directed transversely to the direction of advance and, in each case, a chain or a cable (11, 11') guided above the coupling jack (1) by a pulley (12, 12') and fastened to the tractor vehicle and to a stopping strap (9, 9') of the hydraulic jack (8, 8'), are foreseen.

10. Mounting device according to Claim 9, characterized in that a pair of abutments (13, 13') is foreseen between the coupling jack (1) and the stopping strap (9, 9') to limit the rotation around the axis (2) directed transversely to the direction of advance.

11. Mounting device according to Claim 2, characterized in that the pulley (14, 14') located on the side of the power take-off shaft is a two-belt pulley for each swathing unit.

12. Mounting device according to Claim 11, characterized in that the two-belt pulley (14, 14') is arranged above the axis (2) directed transversely to the direction of advance, its own axis being aligned with the axis (4, 4') directed towards the direction of advance.

13. Mounting device according to Claim 12, characterized in that a trapezoid belt which may be crossed and is equipped with a tension-roller is foreseen between the two two-belt pulleys (14, 14').

14. Mounting device according to Claim 1, characterized in that a chain drive is foreseen between the axes (4, 4', 6, 6') directed towards the direction of advance.

15. Mounting device according to Claim 1, characterized in that the driving of one swathing unit is assured even when the other swathing unit is in its transport position.

16. Mounting device according to Claim 1, characterized in that a ballasted shutter is foreseen between the two swathing units.

17. Mounting device according to Claim 16, characterized in that two shutters, forming a funnel, are fastened to the lower arms.

## Revendications

1. Dispositif de montage pour une machine d'andainage, lequel dispositif peut être fixé à un chevalet d'accouplement (1) du mécanisme de relevage trois points d'un tracteur et peut être relié symétriquement par rapport à l'axe longitudinal du tracteur, à deux unités d'andainage qui, durant le travail, s'appuient sur le sol au moyen de roues de guidage, peuvent pivoter d'une manière limitée autour d'un axe (4, 4') horizontal et dirigé dans la direction de déplacement et sont réglables en inclinaison autour d'un axe (2) horizontal et transversal à la direction de déplacement, caractérisé par le fait que chaque unité d'andainage peut pivoter librement, dans certaines limites, non seulement autour de l'axe (4, 4') horizontal et dirigé dans la direction de déplacement mais aussi autour de l'axe (2) transversal à la direction de déplacement, qu'elle peut pivoter librement, dans certaines limites, autour d'un axe (6, 6') supplémentaire qui est dirigé dans la direction de déplacement et à travers lequel elle est articulée sur un bras de liaison (5, 5') et qu'à chaque unité d'andainage est adjointe une roue palpeuse située à l'avant.

2. Dispositif de montage selon la revendication 1, caractérisé par le fait que les axes (4, 4', 6, 6') qui sont dirigés dans la direction de déplacement sont alignés avec les poulies (par exemple 14, 14') des courroies d'entraînement des unités d'andainage.

3. Dispositif de montage selon la revendication 1, caractérisé par le fait que l'unité d'andainage est liée rigidement à un organe de liaison (7, 7') lequel est articulé (axe 6, 6') au bras de liaison (5, 5').

4. Dispositif de montage selon la revendication 1, caractérisé par le fait qu'un organe de liaison (7, 7') est articulé sensiblement au milieu de l'unité d'andainage au moyen d'une fixation rapide.

5. Dispositif de montage selon la revendication 1, caractérisé par le fait que l'unité d'andainage dont le sens de rotation peut être modifié est articulé à l'organe de liaison (7, 7'), de manière à pouvoir pivoter autour d'un axe vertical.

6. Dispositif de montage selon l'une des revendications 3 ou 4, caractérisé par le fait qu'entre l'organe de laison (7, 7') et le bras de liaison (5, 5') est prévue une butée.

7. Dispositif de montage selon la revendication 1, caractérisé par le fait que la roue palpeuse est pivotable et réglable en hauteur en vue du réglage de l'angle d'inclinaison de l'unité d'andainage.

8. Dispositif de montage selon la revendication 1, caractérisé par le fait qu'au-dessus de l'axe (4, 4') qui est dirigé dans la direction de déplacement, un vérin hydraulique (8, 8') est relié au moyen d'un levier (10, 10') au bras de liaison (5, 5').

9. Dispositif de montage selon la revendication 7, caractérisé par le fait qu'il est prévu une butée (13) pour le pivotement autour de l'axe (2) qui est transversal à la direction de déplacement et à chaque fois une chaîne ou un câble (11, 11') qui est guidé par une poulie (12, 12') par-dessus le chevalet d'accouplement (1) et est fixé au tracteur, ainsi qu'à un étrier d'arrêt (9, 9') du vérin hydraulique (8, 8').

10. Dispositif de montage selon la revendication 9, caractérisé par le fait que comme butée pour le pivotement autour de l'axe (2) qui est transversal à la direction de déplacement est prévue une paire de butées (13, 13') entre le chevalet d'accouplement (1) et l'étrier d'arrêt (9, 9').

11. Dispositif de montage selon la revendication 2, caractérisé par le fait que la poulie (14, 14') qui est du côté de l'arbre de prise de force est réalisée, pour chaque unité d'andainage, sous forme de poulie (14, 14') à deux courroies.

12. Dispositif de montage selon la revendication 11, caractérisé par le fait que la poulie (14, 14') à deux courroies est disposée au-dessus de l'axe (2) qui est transversal à la direction de déplacement et que son axe est aligné avec l'axe (4, 4') qui est dirigé dans la direction de déplacement.

13. Dispositif de montage selon la revendication 12, caractérisé par le fait qu'entre les deux poulies (14, 14') à deux courroies est prévue une courroie trapézoïdale pouvant être croisée et passant sur un galet tendeur.

14. Dispositif de montage selon la revendication 1, caractérisé par le fait qu'entre les axes (4, 4', 6, 6') qui sont dirigés dans la direction de déplacement est prévu un entraînement par chaîne.

15. Dispositif de montage selon la revendication 1, caractérisé par le fait que l'entraînement d'une unité d'andainage est également garanti lorsque l'autre unité d'andainage est en position de transport.

16. Dispositif de montage selon la revendication 1, caractérisé par le fait qu'entre les unités d'andainage est prévu un tablier lesté.

17. Dispositif de montage selon la revendication 16, caractérisé par le fait que deux tabliers sont fixés en forme d'entonnoir aux bras inférieurs.

# Skizze 1

Draufsicht mit einer Schwadeinheit

EP 0 189 783 B1

Skizze 2

Seitenansicht

FR

Skizze 3

Frontansicht